# EUROPEAN PATENT APPLICATION

(11) **EP 2 838 065 A1**
(43) Date of publication of application: **18.02.2015**
(21) Application number: 14180731.3
(22) Date of filing: 12.08.2014
(51) Int. Cl.: G06Q 40/00

(54) **Customer income estimator with confidence intervals**

(30) Priority: 12.08.2013 US 201313964966
(71) Applicant: Fair Isaac Corporation, San Jose, CA 95110 (US)
(72) Inventor: Gao, Lu, San Jose, CA California CA 95110 (US); Dornhelm, Ethan, San Jose, CA California CA 95110 (US); Thomas, Claire G., San Jose, CA California CA 95110 (US); Vancho, Bradley D., San Jose, CA California CA 95110 (US); Gaskin, Joanne, San Jose, CA California CA 95110 (US)
(74) Representative: Mintz Levin Cohn Ferris Glovsky and Popeo LLP

(57) **Abstract**

Data is received that characterizes at least one of credit, financial, and demographic data for a consumer. Thereafter, estimated income is determined for the user. Using the estimated income and the data, a second income level for the consumer is determined also using a confidcnce interval model and a pre-defined confidence thereshold Ci. The second income level for the consumer is less than the determined estimated income and is determined such that actual income for the consumer is *Ci* % likely to exceed the second income level. Data can then be provided that characterizes the second income level. Related apparatus, systems, techniques and articles are also described.

## Description

### TECHNICAL FIELD

The subject matter described herein relates to a confidence interval approach for using income estimators in assessing a consumer's ability to pay.

### BACKGROUND

Measuring consumers' ability to pay has become an important challenge for credit card issuers based on new regulatory requirements coming out of the CARD act. These requirements specify that a lender must measure a consumer's ability to pay before issuing a new credit card or extending the credit limit on an existing credit card. To meet this requirement, the lender must assess both the outstanding debt and income/asset information of a consumer. In practice, it is operationally inefficient to collect all consumers' updated income information at each decision point when considering a credit limit increase decision. Similar difficulties exist in other industries including, for example, other aspects of finance and in the insurance industry.

The industry has been automating this type of decision based on a consumer's recent credit card usage and credit performance in the past. With recent regulations, many lenders have stopped the credit line increase process until they can collect the updated information from consumers to prove their income information as of the decision point. While appreciating the benefit of the new regulations in protecting consumers from being exposed to debt burdens beyond their capacity, these regulations add in delays for consumers who have large capacity for taking on incremental debt. The regulations have also added additional operational expense on the lenders' side in having to attempt to collect income information from all consumers in the pool being considered for credit line increase.

### SUMMARY

In a first aspect, there is a computer-implemented method, in which data is received that is associated with a consumer.

Thereafter, estimated income is determined for the consumer using the received data. Subsequently, it is determined, using a confidence interval model and a pre-defined confidence thereshold Ci and based on the data and the estimated income, a second income level for the consumer that is less than the determined estimated income. The second income level is determined such that actual income for the consumer is Ci % likely to exceed the second income level. Data can be provided that characterizes the second income level.

The data can comprise credit data such as a credit bureau report and/or a masterfile report for the consumer. The data can additionally and/or alternatively include financial information for the consumer other than credit data. The data can additionally and/or alternatively comprise demographic data associated with the consumer.

The confidence interval model can be based on empirically derived values of historical income for a plurality of historical consumers. The confidence interval model can include a linear regression model. The confidence interval model can be one of a plurality of models and can be selected based on a variety of factors including demographic information such as a geographic location of the consumer.

Providing data can include at least one of: displaying the data, transmitting the data to a remote computer, loading the data, and storing the data. At least one of the receiving, determining, and providing can be implemented by at least one data processor forming part of at least one computing system.

The estimated income can be determined using a predictive model trained using a plurality of sets of credit bureau data for corresponding individuals and verified historical income for each of the corresponding individuals. The predictive model can include a scorecard model in which the credit bureau data is used to populate values for the scorecard model. The predictive model can include a neural network model in which the credit bureau data is used to populate values for nodes of the neural network model. The predictive model can include a support vector machine model in which the credit bureau data is used to populate values for the support vector machine model.

In an interrelated aspect, data is received that characterizes at least one of credit, financial, and demographic data for a consumer. Thereafter, estimated income is determined for the user. Using the estimated income and the data, a second income level for the consumer is determined also using a confidence interval model and a pre-defined confidence thereshold Ci. The second income level for the consumer is less than the determined estimated income and is determined such that actual income for the consumer is Ci % likely to exceed the second income level. Data can then be provided that characterizes the second income level.

In a second aspect, there is a non-transitory computer program product storing instructions, which when executed by at least one data processor of at least one computing system, result in operations according to the first aspect.

In a third aspect, there is a system comprising: At least one date processor; and memory storing instructions, which when executed by the at least one data processor, result in operations according to the first aspect.

Computer program products are also described that comprise non-transitory computer readable media storing instructions, which when executed one or more data processors of one or more computing systems, causes at least one data processor to perform operations herein. Similarly, computer systems are also described that may include one or more data processors and a memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including but not limited to a connection over a network (e.g. the Internet, a wireless wide area network, a local area network, a wide area network, a wired network, or the like), via a direct connection between one or more of the multiple computing systems, etc:

The subject matter described herein provides many advantages. For example, the current subject matter, by providing an estimation of income using credit related files generated by third parties, can enable more accurate decisions to be made with regard to financial transactions such as credit line increases.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 is a process flow diagram illustrating a method for determining an income level for a consumer falling within a pre-specified confidence interval;
FIG. 2 is a diagram illustrating income of individuals across nineteen income bands in relation to a 95% confidence threshold; and
FIG. 3 is a diagram illustrating income of individuals in relation to a 90% confidence threshold and a 95% confidence threshold.

### DETAILED DESCRIPTION

The current subject matter provides an analytic approach for applying an income estimator model in assessing consumers' ability to pay. To improve the efficiency of transactions involving a consumer's income level, such as credit line increase decision, income estimator models as described herein can be used in assessing consumers' income as of the decision date. In addition, in some variations, a confidence interval approach can be used to assess the ability of a consumer to pay a certain amount (e.g., for credit cards, etc.).

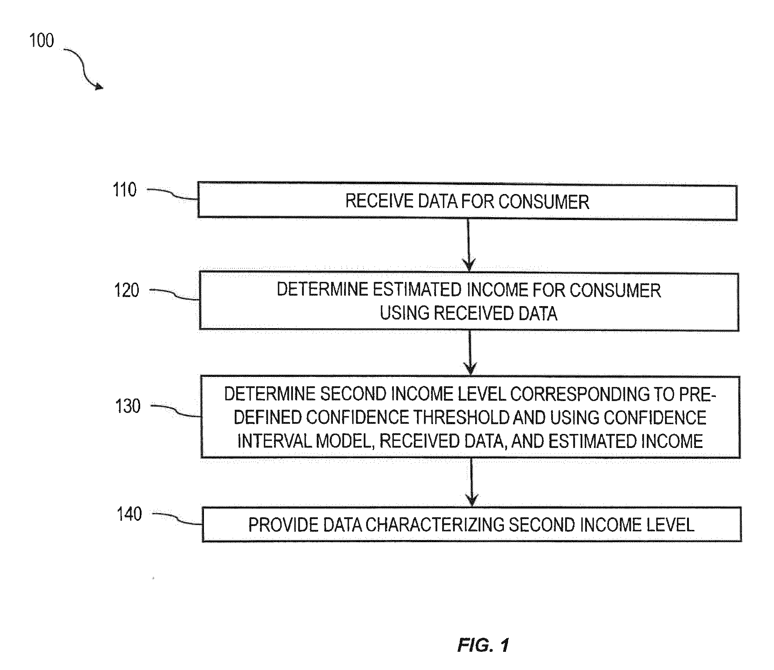

With reference to the diagram 100 of FIG. 1, at 110, data associated with a consumer is received. Subsequently, at 120, an estimated income is determined for the consumer using the data. Next, at 130, a second income level of income for the consumer is determined, using a confidence interval model and a pre-defined confidence threshold Ci. The second income level for the consumer is determined such that actual income for the consumer is *Ci* % likely to exceed the second income level. Data is then provided, at 140, that characterizes the second income level. The data can be, for example, credit data, demographic data, and/or other contextual data relating to the consumer.

With the current subject matter, a random sample of the U.S. credit card population can be collected with the verified income at consumer level attached as of a selected date. Income estimator models can be developed and estimated income is then attached to this sample. The sample can then be segmented into smaller groupings based on similar estimated income values, and then for every estimated income grouping, a distribution of the verified income can be created. Next, a confidence interval can be generated using one of two techniques. One approach comprises a statistical approach comprising linear regression. Another approach that is more practical is to generate the confidence interval purely based on the empirical values in the distribution. For each estimated income grouping, key selected percentiles based on the verified income distribution can be provided.

There are many different predictive methodologies that can be utilized to generate an income estimation that connects what is known about a particular consumer using independently available information such as credit bureau and/or masterfile data. Such a predictive model can be a scorecard model developed using the ModelBuilder™ software suite of Fair Isaac Corporation and can be trained using the dataset characterizing financial activities of the population of consumers during a performance time period with known / verified income levels. In some implementations, a divergence-based optimization algorithm can be trained using the data obtained from the dataset based on data from a large population of consumers. The underlying predictive model may use a variety of predictive technologies, including, for example, neural networks, support vector machines, and the like in order to estimate an income level of a single user based on historical data from a large number of users.

In particular, the models can be trained using data with regard to a plurality of consumers with known income levels. One source of such data are mortgage applications for which credit bureau data and other data was additionally obtained for an application. Mortgage applications are good sources of such information in that, as part of the underwriting process, employers are typically called (or income tax returns are examined) in order to verify income for the applicant. This can be combined with other sources of Fair Credit Reporting Act (FCRA)-compliant data available for the applicant.

In one example, the model was trained using empirical data from a plurality of consumers having annual income up to $600,000 (it was found that larger annual income results can skew the results to overestimate income). Income was verified from mortgage applications and credit bureau data was used for each consumer. While the model used in this example was only for a single individual, models can be generated / trained that aggregate all income for a particular household (or for a particular spouse-spouse relationship). It was found that the predictive characteristics in the credit bureau data are sufficient to build an income estimator that rank order consumer income. In some cases, the model can be generated / trained for a particular geography. For example, the models can vary by ZIP code, county, state, or other geographic grouping. Stated differently, one model might be used for an individual living in San Diego, CA as opposed to an individual living in Wichita, Kansas. In some variations, census data or other publicly available data can be used by the model during the training period and/or input during run-time income score estimation.

In addition, the current income estimation techniques / scores can be used to determine a customer's ability to pay (ATP). With ATP calculations, it is important to avoid overestimation of income. In particular, a confidence interval can be adopted that estimates that income is at least a certain amount at a selected confidence level (e.g., 95% likely that the consumers income exceeds $75,000 per year). With such an arrangement, starting with an estimate of income, an empirically derived confidence interval can be applied as a filter to bring the estimate to a specified level of certainty. It will be appreciated that the confidence interval approach can be used with income estimation techniques other than those presented herein.

Stated differently, confidence interval can be characterized as an empirically derived confidence threshold to bring estimated income to required certainty. For example, a user can specify required confidence level as parameter, e.g. 90 or 95%. The confidence threshold can be derived from verified income sample such that estimated income is appended to a development sample. The sample can be split into 5% (or other amount) intervals by estimated income. Within each interval, the records can be broken into 1% bins based on an empirical assessment of the distribution of consumers' actual incomes. Thereafter, the actual amount associated with the specified confidence threshold can be assigned. Such an arrangement allows a user to be X% confident that a consumer's income is greater than a certain amount.

In one example implementing the subject matter described herein, a credit line decision was simulated for card issuers that was designed to allow for line extensions of varying amounts or percentages of debt increase. For example, credit line increases of specific amounts: $1K, $3K, $5K or $10K; and/or credit line increases of specific percentages of credit lines: 1%, 5%, 10% or 20%; and/or disposable income factor (to convert gross income to net disposable income) from 0.3 to 0.7. Given a specified confidence interval (sometimes referred to as a confidence threshold), approval / declination rates were compared for consumers who would receive a credit line increase based on their estimated income with those who would receive credit line increases based on their verified income.
"Approval" definition:
If (estimated monthly income at the confidence interval point * disposable factor)
   > monthly debt + minimum monthly payment based on assumption of full utilization of increased line amount
   then approve
   else reject

In another example, for a credit line increase of $3,000, the monthly payment for an individual was assumed to increase by $150 and it was assumed that the disposable income factor was 0.5 and a confidence interval of 95% is required.

Initially, an individual's income was estimated to be $150K. After applying a confidence filter, the income is reduced to $60K. Thereafter, the existing MDS on file can be checked (e.g., $1K), and a new MDS can be calculated with the new credit) ($1K + $150). In this context, MDS refers to monthly debt service which is a quantification of a consumer's monthly debt obligation (e.g. mortgage payment, auto payments, minimum credit card payments, etc.). An ability to pay calculation can next be generated (i.e., does $60K give the consumer the ability to repay?) by: $60,000/12 = $5,000 per month * disposable factor of 0.5 = $2,500. As $2500 exceeds $1150, then it can be determined that the customer has the ability to repay. The lender can then adjust the line offer based on any lender strategies. The simulation results demonstrated a false positive rate (those who should have been rejected based on their actual income, but who were approved using the income estimator with confidence interval approach) of only 2.5%.

In simulating this approach in the credit card line increase decision when considering $1,000 and $3,000 line increases, it was found that the false positive rate (those who should be rejected based on their actual income, but who were approved using the income estimator with confidence interval approach) stays at a very low level. The approval rate is quite high. This suggests that in the U.S. population, there are significant percentages of consumers who are far from reaching their capacity limit when considering credit limit increases within $3,000. It is quite efficient then to apply the income estimator model with confidence interval approach on this group of the consumers, where the final credit increase decision using this approach is highly correlated with the decisions made assuming using the verified income information. This approach introduces tremendous efficiencies for the lender---rather than engaging in the time consuming and expensive effort to collect actual income, the invention allows the lender to apply an automated process to assess ability to pay, all the while addressing the regulatory concern that the assessment not overstate the consumer's ability to take on incremental debt.

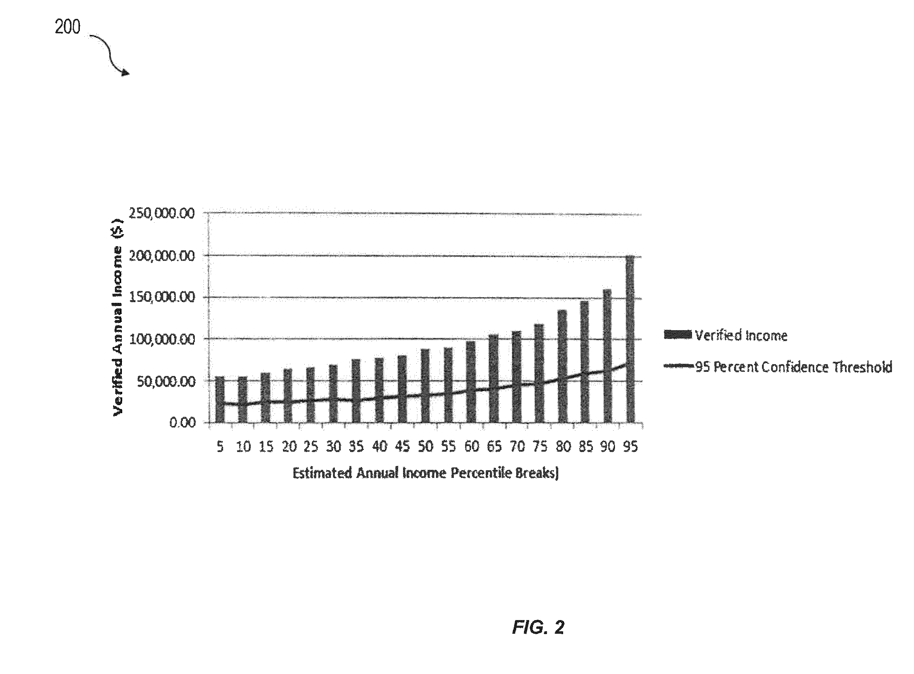

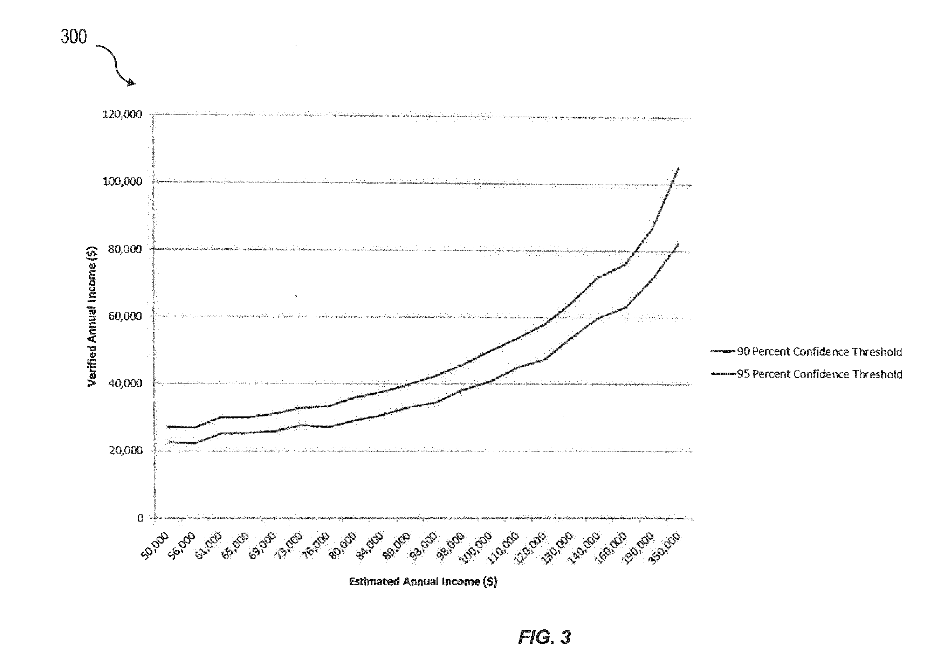

FIG. 2 is a diagram 200 that shows a population being segmented into 19 different bins (with the diagram showing verified income relative to estimated income). Thereafter, the verified income amounts are assigned for the specified confidence level (in this case the 95 percent confidence threshold). Stated differently, with the current subject matter, a consumer's estimated income can be adjusted at a selected confidence level x, such that at the selected confidence level, only 100-x% of consumers would have income level that is below the projected value. For example, at a 95% confidence level for an estimated income at $120,000 (see diagram 300 of FIG. 3), one can determine a conservative income estimate of $60,000. Based on the observed data, only 5 consumers out of every 100 that had an estimated income of $120,000 had a verified income lower than $60,000.

One or more aspects or features of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device (e.g., mouse, touch screen, etc.), and at least one output device.

These computer programs, which can also be referred to as programs, software, software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and subcombinations of the disclosed features and/or combinations and subcombinations of several rther features disclosed above. In addition, the logic flow(s) depicted in the accompanying figures and/or described herein do not necessarily require the particular order shown, or sequential order, to achieve desirable results. Other implementations may be within the scope of the following claims.

## Claims

1. A computer-implemented method comprising:
receiving data associated with a consumer;
determining, using the data, estimated income for the consumer;
determining, using a confidence interval model and a pre-defined confidence thereshold *Ci* and based on the data and the estimated income, a second income level for the consumer that is less than the determined estimated income, wherein the second income level is determined such that actual income for the consumer is *Ci* % likely to exceed the second income level; and
providing data characterizing the second income level.

2. A method as in claim 1, wherein the data comprises credit data.

3. A method as in claim 2, wherein the data comprises at least one of:
a credit bureau report for the consumer; a masterfile report for the consumer; and
financial information for the consumer other than credit data.

4. A method as in any of the preceding claims, wherein the data comprises demographic data associated with the consumer.

5. A method as in any of the preceding claims, wherein the confidence interval model is based on empirically derived values of historical income for a plurality of historical consumers.

6. A method as in any of the preceding claims, wherein the confidence interval model comprises a linear regression model,

7. A method as in any of the preceding claims, wherein the confidence interval model is one of a plurality of models and is selected based on a geographic location of the consumer.

8. A method as in any of the preceding claims, wherein providing data comprising at least one of: displaying the data, transmitting the data to a remote computer, loading the data, and storing the data.

9. A method as in any of the preceding claims, wherein at least one of the receiving, determining, and providing is implemented by at least one data processor forming part of at least one computing system.

10. A method as in any of the preceding claims, wherein estimated income is determined using a predictive model trained using a plurality of sets of credit bureau data for corresponding individuals and verified historical income for each of the corresponding individuals.

11. A method as in claim 10, wherein the predictive model comprises a scorecard model in which the credit bureau data is used to populate values for the scorecard model.

12. A method as in claim 10 or claim 11, wherein the predictive model comprises a neural network model in which the credit bureau data is used to populate values for nodes of the neural network model.

13. A method as in any of claims 10 to 12, wherein the predictive model comprises a support vector machine model in which the credit bureau data is used to populate values for the support vector machine model.

14. A non-transitory computer program product storing instructions, which when executed by at least one data processor of at least one computing system, result in operations according to any of the preceding claims.

15. A system comprising:
at least one data processor; and
memory storing instructions, which when executed by the at least one data processor, result in operations according to any of claims 1 to 13.
